## Europäisches Patentamt
## European Patent Office
## Office européen des brevets

(19)

(11) Numéro de publication: **0 236 217**
**B1**

(12)

# FASCICULE DE BREVET EUROPEEN

(45) Date de publication du fascicule du brevet:
14.06.89

(51) Int. Cl.⁴: **F16L 33/02**

(21) Numéro de dépôt: 87400386.6

(22) Date de dépôt: 23.02.87

(54) Collier de serrage.

(30) Priorité: 25.02.86 FR 8602591
09.05.86 FR 8606716

(43) Date de publication de la demande:
09.09.87 Bulletin 87/37

(45) Mention de la délivrance du brevet:
14.06.89 Bulletin 89/24

(84) Etats contractants désignés:
AT BE CH DE ES GB IT LI LU NL SE

(56) Documents cités:
EP-A- 0 079 252
FR-A- 2 523 260
US-A- 1 559 049
US-A- 1 942 600
US-A- 3 898 713

(73) Titulaire: **Etablissements CAILLAU, 28, rue Ernest Renan, F-92130 Issy-les-Moulineaux(FR)**

(72) Inventeur: **Calmettes, Lionel, Allée des Prés-du-Bourg Cidex 1648 No.6, F-41200 Romorantin(FR)**
Inventeur: **André, Michel, 140, rue du 8-Mai, F-41200 Romorantin(FR)**

(74) Mandataire: **Descourtieux, Philippe et al, CABINET BEAU de LOMENIE 55 rue d'Amsterdam, F-75008 Paris(FR)**

ACTORUM AG

## Description

On connaît, notamment par le brevet européen 3192, un collier de serrage particulièrement simple, constitué par une bande métallique enroulée sur elle-même, ses deux extrémités se recouvrant partiellement l'une l'autre, définissant ainsi une extrémité intérieure et une extrémité extérieure.

Chacune des extrémités comporte des moyens complémentaires, de serrage et d'accrochage, permettant le serrage du collier, par exemple sur un tube souple emmanché sur un tuyau rigide. De préférence l'extrémité extérieure de la bande est constituée par un crochet qui est destiné à coopérer, après serrage, avec une oreille disposée au voisinage de l'extrémité intérieure de la bande. La bande se prolonge, au-delà du moyen d'accrochage situé au voisinage de l'extrémité intérieure, par une semelle qui s'étend, dans la position non serrée du collier, entre les deux moyens d'accrochage.

Des colliers de ce genre donnent toute satisfaction, tant pour leur facilité de fabrication, que pour leur montage et leur serrage.

Il est évidemment avantageux de livrer les colliers dans leur position non serrée, mais on constate alors, notamment si leur diamètre est quelque peu important, qu'ils s'emmêlent les uns dans les autres. L'utilisateur doit alors les séparer avant de les monter, ce qui conduit à des pertes de temps.

L'invention a donc pour objet de remédier à l'inconvénient qui vient d'être mis en évidence, tout en améliorant la sécurité du montage, du serrage et de l'accrochage des deux extrémités du collier.

Selon l'invention, l'extrémité intérieure de la bande constituant le collier se termine par un pli radial généralement en forme de T, cependant que l'extrémité extérieure présente, en arrière du moyen d'accrochage qu'elle comporte, une fente longitudinale dont la largeur est au moins égale à celle de la barre verticale du T.

Ainsi, sans être serré, le collier ne présente aucune solution de continuité dans sa périphérie, ce qui évite le risque évoqué plus haut. En outre, ainsi qu'on le verra plus loin, la sécurité de sa mise en place est améliorée.

D'autre part, il apparaît utile, pour faciliter la mise en place et le montage d'un tube souple sur un tuyau ou organe rigide, préalablement à son serrage par un collier, que ce dernier ait été auparavant emmanché sur le tube. Bien évidemment, le collier ne doit pas être serré avant le montage du tube, mais son emmanchement doit être suffisamment dur pour permettre la manipulation du tube sans risquer la séparation des deux éléments.

Le collier, présentant la caractéristique ci-dessus énoncée, peut, dans certains cas, répondre aux exigences un peu contradictoires qui viennent d'être exposées mais cela exige des tolérances relativement étroites du diamètre extérieur du tube et du diamètre intérieur du collier, dans sa position non serrée. De telles conditions, théoriquement possibles, sont difficilement réalisables dans le cas de fabrications en grande série, comme on en rencontre dans la construction automobile notamment, où se développe la robotisation du montage des véhicules.

Il sera donc avantageux de munir le collier de moyens permettant son emmanchement facile sur un tube ou analogue, tout en assurant, avant son serrage sur le tube, le maintien de l'emmanchement tout au long des manipulations du tube.

A cet effet, le collier selon l'invention comportera, audelà de l'extrémité de la fente longitudinale, opposée au moyen d'accrochage prévu à l'extrémité extérieure de la bande, un crochet ménagé dans la bande et dirigé vers l'extérieur, cependant qu'un organe élastique, tel par exemple qu'une bande de caoutchouc ou analogue, est attelé, d'une part, audit crochet, d'autre part, au pli radial de l'extrémité intérieure de la bande.

Grâce à ces dispositions, l'organe élastique n'empêche aucunement l'augmentation nécessaire du diamètre intérieur du collier au moment de son emmanchement sur un tube, mais provoque ensuite un resserrement suffisant du collier sur le tube pour l'y maintenir, sans pour autant gêner la mise en place ultérieure du tube sur l'organe destiné à le recevoir.

L'invention sera mieux comprise et diverses caractéristiques secondaires ainsi que ses avantages apparaîtront au cours de la description qui va suivre de modes de réalisation avantageux, donnés uniquement à titre d'exemples. A cet effet, on se reportera aux dessins joints en annexe dans lesquels :

- la figure 1 est une vue en perspetive du collier de serrage selon l'invention, dans sa position ouverte ;
- la figure 2 est une vue de profil du collier dans sa position fermée, mais non serrée ;
- la figure 3 est une vue de dessus du collier représenté sur la figure 2 ;
- la figure 4 est une vue de profil du collier dans sa position serrée ;
- la figure 5 est une vue en perspective d'une variante de réalisation du collier selon l'invention, dans sa position non serrée.

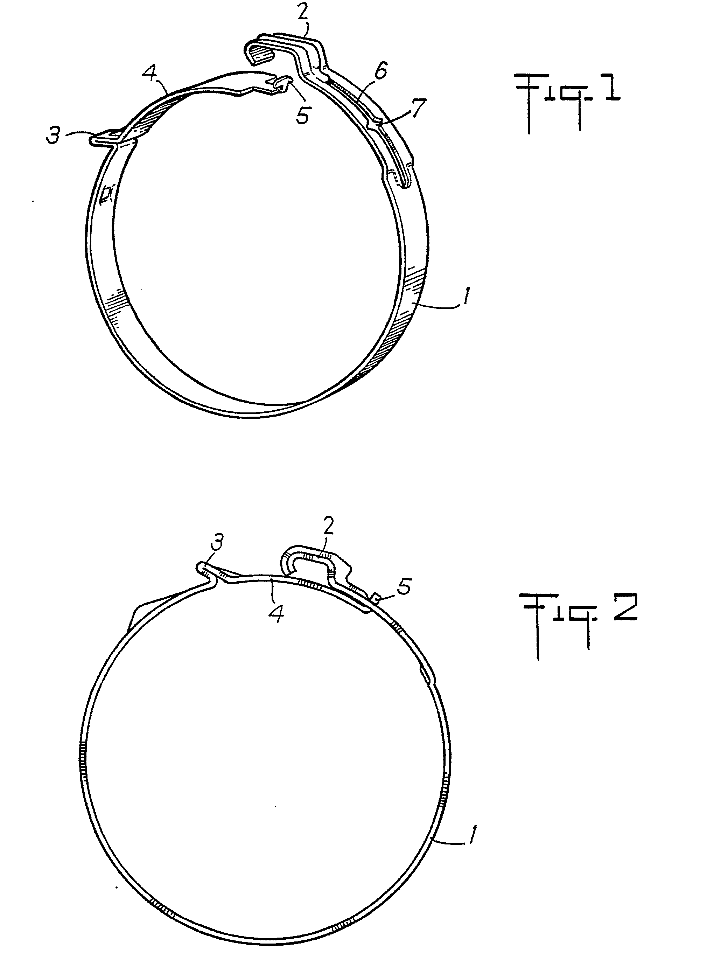

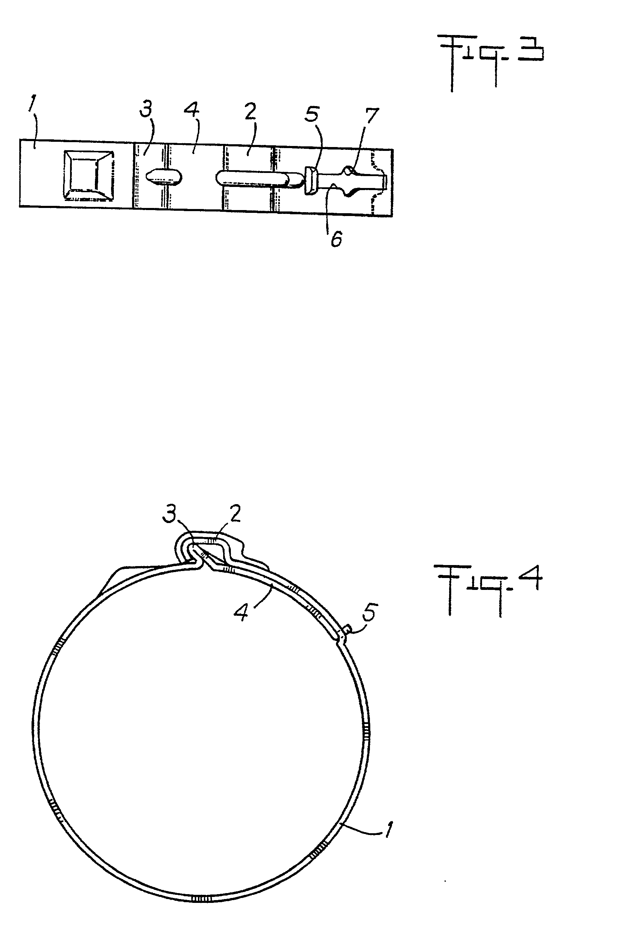

Si l'on se reporte au dessin, on voit un collier de serrage d'un type analogue à celui faisant l'objet du brevet européen précité. La bande métallique 1 est enroulée sur elle-même et son extrémité extérieure comporte un crochet 2 destiné à s'agrafer sur une oreille 3 prévue au voisinage de l'extrémité intérieure. Au-delà de cette oreille 3, la bande 1 se prolonge par une semelle 4 s'étendant, comme on le voit sur la figure 1, mais surtout sur la figure 2, entre l'oreille 3 et le crochet 2.

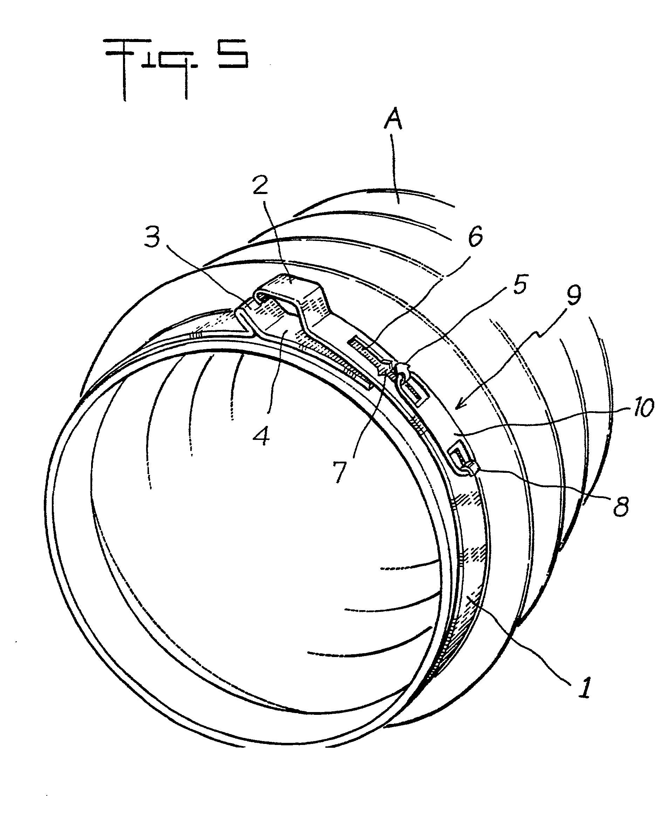

La semelle 4 se termine, du côté opposé à l'oreille 3, par un pli généralement radial 5 qui est découpé en forme de T et dirigé vers l'extérieur, la barre horizontale du T étant sensiblement transversale par rapport au plan de symétrie du collier. En arrière du crochet 2, l'extrémité extérieure de la bande présente une fente longitudinale 6, bien visible sur la figure 3. La largeur de cette fente est au moins égale à celle de la barre verticale du pli radial 5 en T, qui, comme on le verra plus loin, est destiné à y être engagé. La longueur de la fente 6 doit être suffisante pour permettre l'agrafage du crochet 2 sur l'oreille 3.

La fente 6 et la barre verticale du pli radial en T sont, de préférence, situées dans le plan de symétrie du collier.

Pour permettre une fermeture facile du collier, avant son serrage, il est avantageux de prévoir dans une zone de la fente 6, éloignée du crochet 2, une lumière 7 dont la dimension transversale est au moins égale à la longueur de la barre horizontale du T.

On soulignera ici que par "forme de T" on entend essentiellement un profil coudé, par exemple celui formé par la lettre grecque majuscule "gamma" (Γ).

Le collier selon l'invention est généralement fabriqué par roulage d'une bande de métal, suivi ou précédé des découpages et pliages nécessaires pour faire apparaître les différents éléments qui viennent d'être décrits. La dernière phase de la fabrication consiste cependant à amener le pli radial 5 en regard de la lumière 7 et à y introduire la barre horizontale du T. Lorsqu'on libère le collier, l'élasticité du métal amène le pli 5 en butée sur l'extrémité de la fente 6, voisine du crochet 2.

Le collier peut être ainsi livré en grande quantité dans sa position fermée (figure 2) sans risquer la formation de grappes de colliers. Après montage du collier, en général par coulissement, sur le tube ou la pièce à serrer, le crochet 2 est rapproché de l'oreille 3 par un outil approprié en forme de pince, jusqu'à ce que l'agrafage ait lieu. Au cours de cette opération, la barre verticale du pli 5 recule dans la fente qui, accessoirement, lui sert de guide, jusqu'à l'extrémité de cette dernière, éloignée du crochet 2.

Si, dans certains cas, le montage du collier ne peut être effectué par coulissement sur la pièce à serrer, on peut facilement ouvrir le collier en amenant le pli radial 5 en regard de la lumière 7 et en le dégageant de cette dernière. Après montage, on effectue l'opération inverse puis on procède au serrage dans les conditions indiquées plus haut.

Si l'on se reporte maintenant à la figure 5, on voit un collier de serrage du type qui vient d'être décrit, les éléments déjà décrits portant les mêmes références.

On notera cependant qu'au-delà de l'extrémité de la fente longitudinale 6, opposée au moyen d'accrochage 2 du collier, la bande 1 comporte un crochet 8, dirigé vers l'extérieur du collier.

Un organe élastique désigné par la référence générale 9 est attelé, d'une part, au crochet 8, d'autre part, au pli radial 5 prévu à l'extrémité intérieure 4 de la bande. Cet organe 9 peut présenter diverses formes, telles que celle d'un ressort ou d'une simple bande plate de caoutchouc 10 comportant un trou à chacune de ses extrémités. C'est cette configuration qui est représentée sur la figure, le crochet 8 et le pli radial 5 étant introduits dans les trous de la bande. On pourrait également utiliser un anneau de caoutchouc dont les boucles d'extrémité seraient engagées sur le crochet 8 et le pli radial 5.

Grâce à cet organe élastique 9, le crochet 8 et le pli radial 5 sont sollicités l'un vers l'autre. Les dimensions de l'organe élastique et sa force de rappel sont telles que les moyens d'accrochage 2 et 3 sont normalement maintenus très près l'un de l'autre, malgré la tendance naturelle du collier à prendre la position visible sur la figure 2.

L'emmanchement d'un collier perfectionné sur un tube souple, tel par exemple que l'extrémité d'un soufflet A, utilisé pour la protection des joints articulés (joints de cardan) d'une transmission de véhicule, s'effectue facilement. Il suffit d'augmenter quelque peu le diamètre intérieur du collier contre la force de rappel de l'organe élastique 9. Lorsque le collier est emmanché, comme on le voit sur la figure, la force de rappel de l'organe élastique 9 assure un serrage suffisant pour maintenir le collier en place pendant les manipulations du soufflet, sans pour autant gêner son montage sur le tuyau ou organe rigide destiné à le recevoir. Le serrage du collier est ensuite réalisé comme on l'a décrit plus haut et est maintenu par l'engagement du moyen d'accrochage 2 sur l'oreille 3.

L'invention est particulièrement intéressante dans les industries telles que la construction automobile, où de nombreux colliers doivent être utilisés sans qu'il en résulte des temps de montage importants.

## Revendications

1. Collier de serrage constitué par une bande (1) de métal enroulée sur elle-même et comportant à l'une de ses extrémités, dite extérieure, et au voisinage de l'autre, dite intérieure, des moyens complémentaires d'accrochage (2, 3), la bande de métal se prolongeant, au-delà du moyen d'accrochage disposé sur l'extrémité intérieure, par une semelle (4) qui s'étend dans la position non serrée du collier, entre les deux moyens d'accrochage, caractérisé en ce que l'extrémité intérieure de la bande se termine par un pli radial (5) généralement en forme de T dirigé vers l'extérieur, cependant que l'extrémité extérieure présente, en arrière de son moyen d'accrochage (2), une fente longitudinale (6) dont la largeur est au moins égale à celle de la barre verticale du T.

2. Collier de serrage selon la revendication 1, caractérisé en ce que la barre verticale du pli radial en T et la fente longitudinale sont situées dans le plan de symétrie du collier.

3. Collier de serrage selon l'une quelconque des revendications 1 et 2, caractérisé en ce que la fente longitudinale (6) présente, dans une zone éloignée du moyen d'accrochage (2) de l'extrémité extérieure de la bande, une lumière dont la dimension transversale est au moins égale à la longueur de la barre horizontale du pli radial en T.

4. Collier de serrage selon l'une quelconque des revendications précédentes, caractérisé en ce qu'au-delà de l'extrémité de la fente longitudinale (6), opposée au moyen d'accrochage (2) prévu à l'extrémité extérieure de la bande (1), cette dernière présente un crochet (8) dirigé vers l'extérieur, et en ce qu'un organe élastique (9), tel par exemple qu'une bande de caoutchouc (10) ou analogue, est attelé, d'une part, audit crochet, d'autre part, au pli radial (5) de l'extrémité intérieure (4) de la bande.

## Patentansprüche

1. Schlauchklemme, bestehend aus einem um sich selbst aufgerollten Metallband (1), welches an einem seiner Enden, u. zw. dem äußeren, und in Nähe des anderen, u. zw. des inneren, Endes komplementäre Verhakungsmittel (2, 3) umfaßt, wobei das Metallband über das am inneren Ende angeordnete Verhakungsmittel hinaus durch einen Gurt (4) verlängert ist, der sich in der nicht geklemmten Position der Schlauchklemme zwischen den beiden Verhakungsmitteln erstreckt, dadurch gekennzeichnet, daß das innere Ende des Bandes in einer radialen Aufbiegung (5) im allgemeinen in Form eines nach außen gerichteten T endet, wogegen das äußere Ende hinter seinem Verhakungsmittel (2) einen länglichen Schlitz (6) aufweist, dessen Breite mindestens gleich jener des vertikalen Gliedes des T ist.

2. Schlauchklemme nach Anspruch 1, dadurch gekennzeichnet, daß das vertikale Glied der radialen T-förmigen Aufbiegung und der längliche Schlitz in der Symmetriebene der Schlauchklemme angeordnet sind.

3. Schlauchklemme nach einem der Ansprüche 1 und 2, dadurch gekennzeichnet, daß der längliche Schlitz (6) in einem vom Verhakungsmittel (2) des äußeren Endes des Bandes entfernt liegenden Bereich eine Öffnung aufweist, deren Querdimension mindestens gleich der Länge des horizontalen Gliedes der radialen T-förmigen Aufbiegung ist.

4. Schlauchklemme nach einem der vorhergehenden Ansprüche, dadurch gekennzeichnet, daß das Band (1) jenseits des Endes des länglichen Schlitzes (6), das gegenüber dem am äußeren Ende desselben vorgesehenen Verhakungsmittel (2) vorgesehen ist, einen nach außen gerichteten Haken (8) aufweist, und daß ein elastisches Organ (9), wie beispielsweise ein Band (10) aus Gummi oder dgl., einerseits am Haken und anderseits an der radialen Aufbiegung (5) des inneren Endes (4) des Bandes angehängt ist.

## Claims

1. Clamp constituted by a band (1) of metal wound over itself and comprising at one of its ends, called outer end, and close to the other end, called inner end, complementary fastening means (2, 3) the metal band being extended, beyond the fastening means situated at the inner end, by a sole-plate (4) which extends in the unfastened position of the clamp, between the two fastening means, characterized in that the inner end of the band ends into a bent-up part (5), generally shaped as an outwardly directed T, whereas the outer end is provided, at the back of its fastening means (2), with a longitudinal slot (6) of which the width is at least equal to that of the vertical bar of the T.

2. Clamp according to claim 1, characterized in that the vertical bar of the T-shaped bent-up part and the longitudinal slot are situated in the plane of symmetry of the clamp.

3. Clamp according to any one of claims 1 and 2, characterized in that the longitudinal slot (6) comprises, in an area distant from the fastening means (2) of the outer end of the clamp, a hole whose transversal dimension is at least equal to the length of the horizontal bar of the radial T-shaped bent-up part.

4. Clamp according to any one of the preceding claims, beyond the end of said longitudinal slot (6), opposite the fastening means (2) provided on the outer end of the band (1), said latter comprises and outwardly directed hook (8), and in that elastic means (9), such as for example a rubber band (10) or the like, are coupled, on the one hand to said hook, and on the other hand, to the radial bent-up part (5) of the inner end (4) of the band.

Fig. 1

Fig. 2

EP 0 236 217 B1

Fig. 3

Fig. 4

# Fig. 5